**Europäisches Patentamt**

**European Patent Office**

**Office européen des brevets**

(19)

(11) Veröffentlichungsnummer : **0 355 593 B1**

## (12) EUROPÄISCHE PATENTSCHRIFT

(45) Veröffentlichungstag der Patentschrift :
**11.11.92 Patentblatt 92/46**

(51) Int. Cl.⁵ : **C01B 33/107**, C01B 33/08

(21) Anmeldenummer : **89114776.1**

(22) Anmeldetag : **10.08.89**

(54) **Verfahren zur Steigerung des Anteils an Siliciumtetrachlorid.**

(30) Priorität : **20.08.88 DE 3828344**

(43) Veröffentlichungstag der Anmeldung :
**28.02.90 Patentblatt 90/09**

(45) Bekanntmachung des Hinweises auf die
Patenterteilung :
**11.11.92 Patentblatt 92/46**

(84) Benannte Vertragsstaaten :
**BE DE FR GB IT NL SE**

(56) Entgegenhaltungen :
**DE-A- 2 630 542**
**DE-A- 3 303 903**
**DE-C- 3 809 784**

(73) Patentinhaber : **HÜLS
AKTIENGESELLSCHAFT
Paul-Baumann-Strasse 1 Postfach 1320
W-4370 Marl 1 (DE)**

(72) Erfinder : **Ruff, Klaus
Im Grund 7b
W-5210 Troisdorf (DE)**

**Beschreibung**

Die Erfindung betrifft ein Verfahren zur Steigerung des Anteils an Siliciumtetrachlorid bei der Umsetzung von Chlorwasserstoff oder einer Mischung von Chlorwasserstoff und Chlor mit metallisches Silicium enthaltenden Stoffen bei einer Reaktionstemperatur im Bereich von 300 °C bis 1 400 °C.

Bei der Reaktion von Silicium mit Chlorwasserstoff enthält das Reaktionsgemisch Siliciumtetrachlorid, Trichlorsilan und in geringem Umfang Dichlorsilan. Bei niedrigen Reaktionstemperaturen überwiegt der Anteil an Trichlorsilan, bei höheren Temperaturen wird vornehmlich Siliciumtetrachlorid gebildet. Der Trichlorsilananteil im Reaktionsgemisch beträgt z. B. gemäß DE-OS 32 30 590 bei 260 °C etwa 95 Gew.-%, bei 400 °C etwa 70 Gew.-%, bei 600 °C etwa 40 Gew.-% und bei 800 °C etwa 20 Gew.-% bei Reaktionsgleichgewicht. Der Anteil an Dichlorsilan im Reaktionsgemisch ist gering und beträgt maximal 1 bis 2 Gew.-%.

Es ist ferner gemäß DE-A-33 03 903 bekannt, elementares Silizium mit Chlorwasserstoff zur Herstellung von Trichlorsilan umzusetzen und dabei zusätzlich Tetrachlorsilan in den Reaktionsraum einzuleiten.

Weiterhin wird nich gemäß DE-A-2630542 zur Herstellung des Verhältnisses von Trichlorsilan/Tetrachlorsilan zusätzlich Tetrachlorsilan in den Reaktionsraum eingebracht.

Durch die Reaktionstemperatur ist - bei sonst gleichen Reaktionsbedingungen - das Verhältnis zwischen Trichlorsilan und Siliciumtetrachlorid festgelegt. Bei einer gleichzeitigen Produktion dieser beiden Verbindungen in einer Anlage kommt der Anpassung an eine wechselnde Nachfrage nach den Bestandteilen dieses Gemischs eine hohe wirtschaftliche Bedeutung zu.

Diese Anpassung kann nicht durch die Einstellung wechselnder Reaktionstemperaturen durchgeführt werden, da die Installation eines Reaktors mit dem zugehörigen Kühlsystem zur Abführung der Reaktionswärme, der in einem größeren Temperaturbereich betrieben werden soll, technisch aufwendig und nicht wirtschaftlich ist.

Die Erhöhung des Anteils an Siliciumtetrachlorid kann dadurch erfolgen, daß man das bei der Reaktion entstandene Trichlorsilan in einem nachgeschalteten Schritt durch Chlorierung, z. B. Photochlorierung, in Siliciumtetrachlorid umwandelt. Auch diese Verfahrensweise ist aufwendig.

Es bestand daher die Aufgabe, ein wirtschaftliches Verfahren zur Steigerung des Anteils an Siliciumtetrachlorid bei der Umsetzung von Chlorwasserstoff oder einer Mischung von Chlorwasserstoff und Chlor mit metallisches Silicium enthaltenden Stoffen zu finden.

In Erfüllung dieser Aufgabe wurde ein Verfahren zur Steigerung des Anteils an Siliciumtetrachlorid bei der Umsetzung von Chlorwasserstoff oder einer Mischung von Chlorwasserstoff und Chlor mit metallisches Silicium enthaltenden Stoffen bei einer eingestellten Reaktionstemperatur von 300 °C bis 1 400 °C gefunden, welches dadurch gekennzeichnet ist, daß man zusätzlich Chlorsilane der allgemeinen Formel

$$SiH_{4-n}Cl_n \text{ ,}$$

wobei n = 1 bis 3 sein kann, in den Reaktionsraum einleitet. Je nach Reaktionsbedingungen entsteht hierbei aus Chlorwasserstoff und Silicium in Anwesenheit der zusätzlich eingespeisten Chlorsilane nicht nur weniger Trichlorsilan als ohne diese Beimischung, sondern die eingesetzten Chlorsilane bilden sich auch ganz oder teilweise zu Siliciumtetrachlorid um.

Dieser Effekt tritt unabhängig vom Typ des Reaktors auf; sowohl beim Wirbelschicht-Verfahren als auch beim Festbett-Verfahren kann auf diese Weise die Ausbeute an Siliciumtetrachlorid gesteigert werden.

Die zugeführten Chlorsilane können sowohl flüssig als auch gasförmig in den Reaktionsraum eingeleitet werden. Es ist jedoch vorteilhaft und bevorzugt, die Zuführung in der Gasphase zusammen mit dem Chlorwasserstoff vorzunehmen.

In einer bevorzugten Ausführung des erfindungsgemäßen Verfahrens wird die entstandene Reaktionsmischung kondensiert, eine trichlorsilanhaltige Fraktion aus dem Kondensat abgetrennt und diese in den Reaktionsraum zurückgeführt.

Beim Wirbelschicht-(Fluidbett-)Verfahren wirkt sich beispielsweise das vorgeschlagene Verfahren wie in der beigefügten graphischen Darstellung gezeigt aus. Ohne Zuspeisung von Trichlorsilan sinkt der Trichlorsilananteil im durch die Reaktion erzeugten Chlorsilangemisch aus Trichlorsilan und Siliciumtetrachlorid bei Änderung der Temperatur von 470 °C auf 570 °C von 70 Gew.-% auf 50 Gew.-%. Leitet man hingegen zusätzlich zum Chlorwasserstoff noch 10 Vol.-% Trichlorsilan, bezogen auf den Chlorwasserstoff, in den Reaktor, so ändert sich im selben Temperaturintervall der Trichlorsilananteil im erzeugten Chlorsilangemisch von 50 Gew.-% auf 0 Gew.-%. Durch das vorgeschlagene Verfahren läßt sich also im betrachteten Temperaturintervall der Anteil an Trichlorsilan von 0 bis 70 Gew.-% nach Belieben einstellen, wohingegen ohne Trichlorsilanbeimischung nur eine Variation von 50 bis 70 Gew.-% Trichlorsilananteil erreichbar ist.

Das entsprechend der erfindungsgemäßen Verfahrensweise hergestellte Siliciumtetrachlorid dient hauptsächlich als Ausgangsprodukt zur Herstellung von hochdisperser Kieselsäure. Das weiterhin anfallende Trichlorsilan ist ein Ausgangsprodukt zur Herstellung von Organosiliciumverbindungen, Hydrophobierungsmitteln sowie hochreinem Silicium für Solarzellen und Halbleiter.

Beispiel 1

Ein Fluidbettreaktor von 200 mm Durchmesser wurde bis zu einer Höhe von 400 mm mit metallischem Siliciumstaub gefüllt, wobei der Siliciumanteil 98 Gew.-% betrug. Bei einem Absolutdruck von 1,5 bar und einer Reaktortemperatur von 550 °C wurde eine Mischung aus 90 Vol.-% Chlorwasserstoff und 10 Vol.-% Trichlorsilan von unten über einen Verteilerboden in das Fluidbett eingeleitet, so daß eine Leerrohrgeschwindigkeit von 15 cm/s eingehalten wurde. Im durch Reaktion erzeugten Chlorsilangemisch betrug der Trichlorsilananteil 10 Gew.-%.

Beispiel 1 A (Vergleichsbeispiel)

Bei einem Vergleichsversuch unter sonst gleichen Bedingungen wie in Beispiel 1, jedoch ohne den Zusatz von Trichlorsilan, erhielt man im Reaktionsgemisch einen Trichlorsilananteil von 54 Gew.-%.

Beispiel 2

Einem vertikalen Festbettreaktor von 40 mm Durchmesser und 100 mm Höhe, gefüllt mit stückigem Silicium (Siliciumgehalt 90 Gew.-%) von 3 bis 5 mm Kantenlänge, wurden 7 Mol/h Chlorwasserstoff und 1,5 Mol/h gasförmiges Trichlorsilan zugeführt. Die Reaktion wurde bei 970 °C und Atmosphärendruck durchgeführt. Nach der Reaktion enthielt das Gasgemisch 2,52 Mol/h Siliciumtetrachlorid und 0,47 Mol/h Trichlorsilan.

Beispiel 2 A (Vergleichsbeispiel)

In einem Vergleichsversuch ohne Trichlorsilan-Beimischung unter sonst gleichen Bedingungen wie in Beispiel 2 wurden bei Einsatz von 7 Mol/h Chlorwasserstoff 1,51 Mol/h Siliciumtetrachlorid und 0,32 Mol/h Trichlorsilan erhalten.

Beispiel 3

In denselben Festbettreaktor wie in Beispiel 2, der mit stückigem Reinstsilicium von 3 bis 5 mm Kantenlänge gefüllt war, wurden bei einer Reaktionstemperatur von 900 °C gasförmig 4 Mol/h Chlorwasserstoff, 1 Mol/h Trichlorsilan und 0,02 Mol/h Dichlorsilan eingeleitet. Nach der Reaktion wurde kein Dichlorsilan gefunden; die Reaktionsgase enthielten 1,45 Mol/h Siliciumtetrachlorid und 0,4 Mol/h Trichlorsilan.

Beispiel 3 A (Vergleichsbeispiel)

In einem Vergleichsversuch ohne Trichlorsilan-Zusatz unter sonst gleichen Bedingungen wie in Beispiel 3 wurde bei Einsatz von 4 Mol/h Chlorwasserstoff ein Reaktionsprodukt aus 0,79 Mol/h Siliciumtetrachlorid und 0,28 Mol/h Trichlorsilan erhalten.

Beispiel 4

In denselben Festbettreaktor wie in Beispiel 2 mit derselben Füllung wurden bei einer Reaktionstemperatur von 1 300 °C 7 Mol/h Chlorwasserstoff, 1,5 Mol/h gasförmiges Trichlorsilan und 0,1 Mol/h gasförmiges Dichlorsilan eingeleitet. Nach der Reaktion enthielten die Reaktionsgase kein Dichlorsilan. Es wurden 2,77 Mol/h Siliciumtetrachlorid und 0,20 Mol/h Trichlorsilan erhalten.

Beispiel 4 A (Vergleichsbeispiel)

In einem Vergleichsversuch ohne Beimischung von Trichlorsilan und Dichlorsilan unter sonst gleichen Bedingungen wie in Beispiel 4 wurden bei Einsatz von 7 Mol/h Chlorwasserstoff 0,79 Mol/h Siliciumtetrachlorid und 0,28 Mol/h Trichlorsilan erhalten.

Beispiel 5

In einen Fluidbettreaktor von 30 mm Durchmesser wurde siliciumhaltiger Staub mit einem Siliciumgehalt von 30 Gew.-% bis zu einer Höhe von 120 mm eingefüllt. Bei einer Reaktionstemperatur von 400 °C und Atmosphärendruck wurde von unten gasförmig eine Mischung aus Chlorwasserstoff und Trichlorsilan (5 Vol.-% Trichlorsilan, bezogen auf Chlorwasserstoff) über eine Fritte eingeleitet, so daß sich eine Leerrohrgeschwindigkeit von 10 cm/s einstellte. Im durch Reaktion erzeugten Chlorsilangemisch wurde ein Trichlorsilananteil von 24 Gew.-% erhalten.

Beispiel 5 A (Vergleichsbeispiel)

In einem Vergleichsversuch ohne Beimischung von Trichlorsilan unter sonst gleichen Bedingungen wie in Beispiel 5 betrug der Trichlorsilananteil im Reaktionsgemisch 45 Gew.-%.

Gehalt an Trichlorsilan im erzeugten Chlorsilangemisch

**Patentansprüche**

1. Verfahren zur Steigerung des Anteils an Siliciumtetrachlorid bei der Umsetzung von Chlorwasserstoff oder einer Mischung von Chlorwasserstoff und Chlor mit metallisches Silicium enthaltenden Stoffen bei einer eingestellten Reaktionstemperatur im Bereich von 300 °C bis 1 400°C, **dadurch gekennzeichnet,** daß man zusätzlich Chlorsilane der allgemeinen Formel

$$SiH_{4-n}Cl_n,$$

wobei n = 1 bis 3 sein kann, in den Reaktionsraum einleitet.

2. Verfahren nach Anspruch 1, dadurch gekennzeichnet, daß man die Reaktionsmischung kondensiert, eine trichlorsilanhaltige Fraktion aus dem Kondensat abtrennt und diese in den Reaktionsraum zurückführt.

**Claims**

1. Process for increasing the amount of silicon tetrachloride in the reaction of hydrogen chloride or a mixture of hydrogen chloride and chlorine with metallic silicon-containing substances at a controlled reaction temperature in the range of 300°C to 1400°C, characterised in that additionally chlorosilanes of the general formula

$$SiH_{4-n}Cl_n,$$

wherein n can be equal to 1 to 3, are introduced into the reaction chamber.

2. Process according to claim 1, characterised in that the reaction mixture is condensed, a trichlorosilane-containing fraction is separated off from the condensate and this is recirculated into the reaction chamber.

**Revendications**

1. Procédé pour accroître la fraction de tétrachlorure de silicium au cours de la réaction de gaz chlorhydrique ou d'un mélange de gaz chlorhydrique et de chlore avec des substances contenant du silicium métallique à une température de réaction réglée dans le domaine de 300°C à 400°C, qui est caractérisé en ce qu'on envoie supplémentairement dans l'espace réactionnel des chlorosilanes de formule générale :

$$SiH_{4-n}Cl_n$$

dans laquelle n peut être 1 à 3.

2. Procédé selon la revendication 1, caractérisé en ce que l'on condense le mélange réactionnel, sépare une fraction contenant du trichlorosilane à partir du condensat et renvoie celle-ci dans l'espace réactionnel.